# EUROPEAN PATENT SPECIFICATION

(11) **EP 0 737 815 B1**
(45) Date of publication and mention of the grant of the patent: **24.10.2001**
(21) Application number: 95903926.4
(22) Date of filing: 21.12.1994
(51) Int. Cl.: F15B 11/00, F16K 17/04

(54) **UNLOADING DEVICE FOR A HYDRAULIC CIRCUIT**
ENTLASTUNGSVORRICHTUNG FÜR HYDRAUSLISCHEN KREISLAUF
DISPOSITIF DE DECHARGE POUR CIRCUIT HYDRAULIQUE

(30) Priority: 22.12.1993 JP 32364493
(43) Date of publication of application: 16.10.1996
(73) Proprietor: KOMATSU LTD., Minato-ku, Tokyo 107-8414 (JP)
(72) Inventor: IKEI, Kazunori, Oyama Factory of KK Komatsu, Oyama-shi, Tochigi-ken 323 (JP); TAKA, Keisuke, Oyama Factory of KK Komatsu, Oyama-shi, Tochigi-ken 323 (JP)
(74) Representative: Steinmeister, Helmut, Dipl.-Ing.
(86) International application number: PCT/JP94/02175
(87) International publication number: WO 95/17609

(56) References cited:
- JP-A- 2 093 175
- JP-B- 2 053 641
- US-A- 4 040 438
- US-A- 4 798 126

## Description

### FIELD OF THE INVENTION

The present invention relates to an unloading system to be employed in a hydraulic circuit for supplying a discharged pressurized fluid of a hydraulic pump to an actuator by a direction control valve.

### BACKGROUND ART

A pressure control valve which represents an unloading system for hydraulic circuits of the above kind is known, for example, from the EP O 361 613 A. In this unloading system, an unload valve which drains a part of supplied pressurised fluid to a tank, and a switching valve which drains a pressurised fluid for biasing said unload valve in a direction for reducing the part of supplied pressurized fluid drained to the tank are arranged in series in axial direction in a valve main body.

In a similar way, US-A-4,040,438 shows an unload valve and a switching valve which are also arranged in a valve main body in series in an axial direction.

In a hydraulic circuit employing a closed center type direction control valve which is designed for closing an inlet port at a neutral position, flow of a discharged pressurized fluid of the hydraulic pump is shut off in the direction control valve to elevate the discharge pressure. As a result, power loss of a driving power source for driving the hydraulic pump becomes large.

Therefore, as a system for reducing the power loss, an unloading system according to the preamble of claim 1 is shown in Japanese Examined Patent Publication (Kokoku) No. Heisei 2-53641.

Namely, it has been known an unloading system which comprises an unload valve including a pressure receiving portion and a valve portion varying an opening area depending upon variation of the pressure at the pressure receiving portion, and a switching valve, is provided. The switching valve is opened while the direction control valve is held in the neutral position, for establishing fluid communication between a discharge passage of the hydraulic pump and a tank. The switching valve is closed upon switching of the valve position of the direction control valve from the neutral position to the supply position. In conjunction therewith, the opening area of the valve portion is varied by a load pressure acting on the pressure receiving portion of the unload valve to branch a part of the discharged pressurized fluid of the hydraulic pump to the tank to make a pressure difference at the upstrean and downstream of the direction control valve constant.

Such unload system encounters a problem in complicated construction since the unload valve constituted of the pressure receiving portion and the valve portion and the switching valve are separated.

The present invention is to improve such defect. Therefore, it is an object of the present invention to provide an unload system for a hydraulic circuit which can significantly simplify the construction.

### DISCLOSURE OF THE INVENTION

In order to accomplish the above-mentioned object, an unloading system according to claim 1 is provided.

A preferred form of realisation of the invention is detailed in claim 2.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the present invention, but are for explanation and understanding only.

In the drawings:
Fig. 1 is an illustration showing a hydraulic circuit having one embodiment of an unloading system according to the present invention; and
Fig. 2 is a section of the above-mentioned embodiment.

### BEST MODE FOR IMPLEMENTING THE INVENTION

The preferred embodiment of an unloading system according to the present invention will be discussed hereinafter with reference to the accompanying drawings.

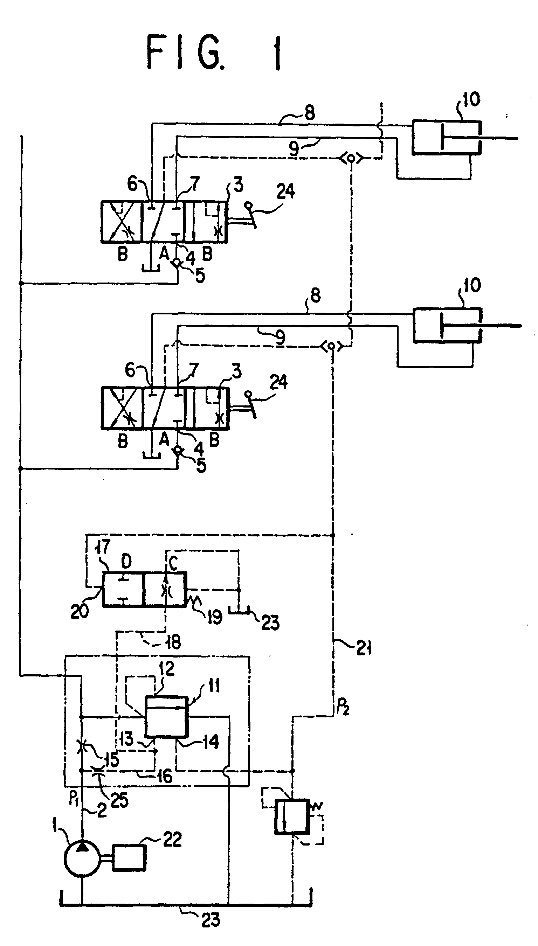

Fig. 1 is an illustration showing a hydraulic circuit having one embodiment of an unloading system according to the present invention. In the shown hydraulic circuit, a discharge passage 2 of a hydraulic pump 1 is connected to an inlet port 4 of a direction control valve 3 via a check valve 5. First and second actuator ports 6 and 7 of the direction control valve 3 are connected to an actuator 10 via first and second circuits 8 and 9, respectively. An unload valve 11 is provided in the discharge passage 2.

A valve body of the unload valve 11 is biased in a direction to increase an open area by a pressure to be applied to a first pressure receiving portion 12 and in a direction to reduce the open area by a pressures respectively applied to second and third pressure receiving portions 13 and 14.

An orifice 15 is provided at a position at the side of the hydraulic pump 1 relative to the unload valve 11 in the discharge passage 2. The pressure at the upstream side of the orifice 15 is introduced into the second pressure receiving portion 13 of the unload valve 11 via a circuit 16. On the other hand, the pressure at the downstream side of the orifice 15 is introduced into the first pressure receiving portion 12. Thus, the open area of the unload valve 11 may be increased or decreased depending upon the pressure difference between upstream and downstream of the orifice 15. Also, the second pressure receiving portion 13 of the unload valve 11 is connected to a tank 23 via a circuit 18 including a switching valve 17. A valve body of the switching valve 17 is maintained at a communicating position C by means of a spring 19, and is adapted to be switched into a shut-off position D by a load pressure P₂ exerted on a pressure receiving portion 20.

The third pressure receiving portion 14 and the pressure receiving portion 20 are connected to a load detection circuit 21.

Next, the operation of the foregoing embodiment will be discussed.

When the valve body of the direction control valve 3 is placed at a pressurized fluid supply position B, the load pressure P₂ is generated in the load pressure detecting circuit 21 to place the valve body of the switching valve 17 at the shut-off position D. Thus, a discharge pressure P₁ is supplied to the second pressure receiving portion 13 of the unload valve 11. Then, when a revolution speed of the engine 22 becomes higher to increase a discharge amount of the hydraulic pump 1 per unit period, the pressure difference between upstream side and downstream side of the orifice 15 is increased. Thus, the valve body of the unload valve 11 is biased in the direction for decreasing the open area so as to reduce the fluid amount to recirculate to the tank 23 to increase the supply fluid amount to the actuator 10. Also, the pressure difference between the discharge pressure P₁ and the load pressure P₂ is increased.

On the other hand, when the revolution speed of the engine 22 is lowered to decrease the discharge amount per unit period, the pressure difference between upstream and downstream of the orifice 15 is reduced. Therefore, the valve body of the unload valve 11 is biased in the direction for increasing the open area to increase the fluid amount recirculated to the tank 23 and thus to reduce the fluid amount to be supplied to the actuator 10. Thus the pressure difference between the discharge pressure P₁ and the load pressure P₂ becomes smaller.

Thus, a supply fluid amount to the actuator depending upon the engine revolution speed can be obtained.

On the other hand, by varying the resistance value of flow restriction of the orifice 15 or the pressure receiving area of the pressure receiving portion of the unload valve 11, the rated value of a set pressure difference of the unload valve can be varied.

On the other hand, when the valve body of the direction control valve 3 is operated from the pressurized fluid supply position B to the neutral position A, the pressure of the load pressure detecting circuit 21 becomes zero to place the valve body of the switching valve 17 at a drain position C. Therefore, the discharge pressure P₁ to be supplied to the second pressure receiving portion 13 of the unload valve 11 flows to the tank 23. As a result, the valve body of the unload valve 11 is biased in the opening direction to be fully opened. Therefore, the discharge pressure P₁ becomes the pressure difference to be caused in the fixed orifice in the unload valve 11. Thus, the power loss of the engine 22 at the neutral position A of the direction control valve 3 can be reduced.

It should be noted that the orifice 25 is provided in the circuit 16 so that a pressure is generated in the discharge passage 2 when the circuit 16 is connected to the tank 23.

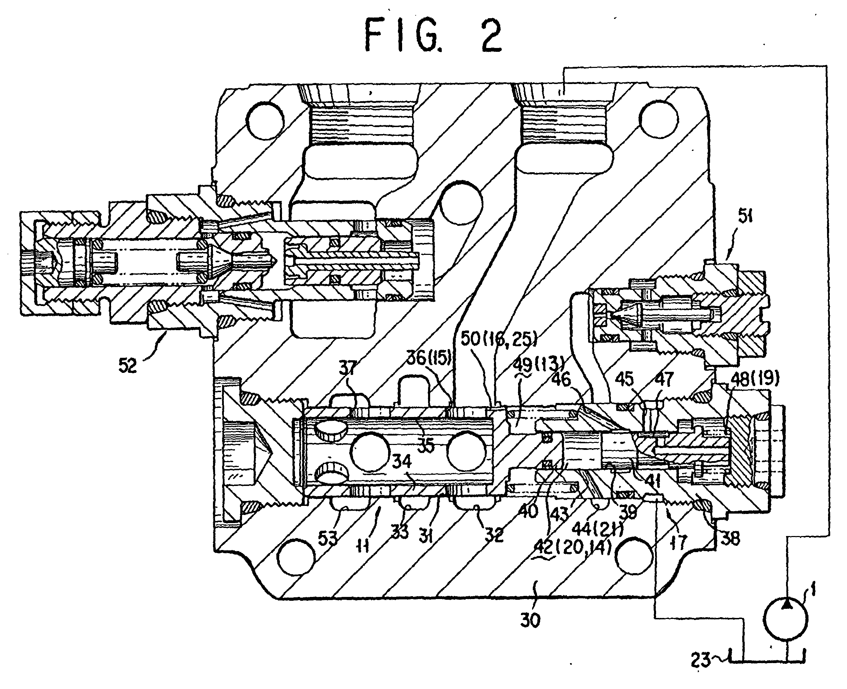

Next, the concrete construction of the unloading system constituted of the unload valve 11 and the switching valve 17 set forth above will be discussed with reference to Fig. 2.

In the shown unloading system, at one side of a valve bore 31 of a valve main body 30, a valve body 34 for establishing and blocking a communication between an inlet port 32, a tank port 33 and an outlet port 53 is engaged. On the valve body 34, an axial bore 35, a first port 36 and a second port 37 are formed. By the first port 36, the inlet port 32 and the axial bore 35 are communicated. In conjunction therewith, the opening area between the tank port 33 and the second port 37 is increased and decreased depending upon the sliding position of the valve body 34. These form the unload valve 11.

At the other side of the bore 31, a plug 38 is inserted and fixed. At one side of an axial bore 39 of the plug 38, a small diameter portion 40 of the valve body 34 of the unload valve 11 is engaged. Also, at the other side of the axial bore 39, a spool 41 forming the switching valve 17 is engaged to define a pressure receiving chamber 42 between the small diameter portion 40 and the spool 41. The pressure receiving chamber 42 is communicated with a load pressure detecting portion 44 via a conduit 43. The pressure receiving chamber 42 is the pressure receiving portion 20 communicated with the third pressure receiving portion 14.

In the spool 41, a small diameter portion 47 establishing and blocking a communication between a first fluid bore 45 and a second fluid bore 46 is formed. The spool 41 is biased in a direction for establishing communication by means of a spring 48 (spring 19 in Fig. 1) and in a direction for blocking communication by the pressure in the pressure receiving chamber 42.

The first fluid bore 45 is communicated with the tank 23. The second fluid bore 46 is communicated with a pressure receiving chamber 49 defined between the valve body 34 and the plug 38. The pressure receiving chamber 49 is communicated with the inlet port 32 via a cut-out 50 of the valve body 34. These cut-out 50 and the second fluid bore 46 are the circuits 16 and 18 in Fig. 1, respectively. Also, the chamber 49 is the first pressure receiving portion 13, in Fig. 1. Also, the cut-out 50 is the orifice 25 in Fig. 1. On the other hand, the axial bore 35 is as the second pressure receiving portion 12. 53 denotes an outlet port connected to the inlet port 4 of the direction control valve 3.

As set forth above, the unload valve 11 and the switching valve 17 are arranged in series in axial direction in the valve main body 30.

It should be noted that. in Fig. 2, 51 denotes a relief valve connected to the load detection port 44 and 52 denotes a safety valve.

Next, the operation of the concrete embodiment will be discussed.

At first, when the direction control valve 3 is held in the neutral position A, the load pressure is not supplied to the load detecting port 44. Thus, the spool 41 is biased toward left by the spring 48 to communicate the second fluid bore 46 to the first fluid bore 45 via the small diameter portion 47. Therefore, the pressure of the pressure receiving chamber 49 is lowered to reduce the force to bias the valve body 34 toward left (in on-load direction).

By this the valve body 34 slides toward right (in unload direction) by the pressure in the axial bore 35 to increase open area between the second port 37 and the tank port 33 to lower the discharge pressure of the hydraulic pump 1 to the pressure level greater than the pressure of the tank port 33 in the extent corresponding to the pressure difference caused in the first port 36 of the valve body 34 (the orifice 15 in Fig. 1).

Next, when the direction control valve 3 is switched from the neutral position A to the supply position B, the load pressure is supplied to the load pressure detecting port 44, the spool 41 is biased toward right by the load pressure in the pressure receiving chamber 42 against the spring 48 to block a communication between the first fluid bore 45 and the second fluid bore 46. Thus, by the discharge pressure supplied to the pressure receiving chamber 49, a force to bias the valve body 34 toward left (in on-load direction) becomes greater.

By this, the valve body 34 slides toward left (in on-load direction) to reduce the open area between the second port 37 and the tank port 33. Thus, the discharge pressure of the hydraulic pump 1 is elevated.

The unload system according to the present invention, operation of which has been discussed above, can simplify the construction thereof since the unload valve 11 and the switching valve 17 are arranged in series in the valve main body 30.

Although the invention has been illustrated and described with respect to exemplary embodiment thereof, it should not be inderstood as limited to the specific embodiment set out above but to include all possible embodiments within the scope of the appended claims.

## Claims

1. An unloading system comprising an unload valve (11) draining a part of supplied pressurized fluid to a tank (23) and a switching valve (17) for draining a pressurized fluid for biasing said unload valve (11) in a direction for reducing the part of supplied pressurized fluid drained to the tank (23), said unload valve (11) and switching valve (17) being arranged in series in axial direction in a valve main body (30), wherein said unload valve (11) is constructed by forming in said valve main body (30) a valve bore (31) having an inlet port (32), a tank port (33) and an outlet port (53), by fitting a valve body (34) in one side of said valve bore (31) for communicating the inlet port (32), the tank port (33) and the outlet port (53), and for increasing and decreasing the open area between said inlet port (32) and said tank port (33), and by forming in said valve bore (31) a first pressure receiving chamber (49) communicated with said inlet port (32), in which a pressure biases said valve body (34) in a direction for reducing said open area **characterised in that** said switching valve (17) is constructed by engaging a spool (41) at the other side of said valve bore (31) for defining a second pressure receiving chamber (42) between said spool and said valve body to which a load pressure is supplied, and by providing a spring (48) for biasing said spool (41) in a direction for communicating said first pressure receiving chamber (49) to said tank (23) against the load pressure of said second pressure receiving chamber (42).

2. An unloading system as set forth in claim 1, wherein said first pressure receiving chamber (49) is defined between said valve body (34), a valve main body (30) and a plug (38), wherein said second pressure receiving chamber (42) is defined between said valve body (34), said plug (38) and said spool (41), by engaging and fixing said plug (38) to the other side of said valve bore (31), by engaging a small diameter portion (40) of said valve body (34) at one side of an axial bore (39) of said plug (38), and by engaging said spool (41) to the other side of the axial bore (39), wherein said first pressure receiving chamber (49) is communicated with said inlet port (32) via a cut-out (50) of said valve body (34), and wherein a first fluid bore (45) communicated with said tank (23) and a second fluid bore (46) communfcated with said first pressure receiving chamber (49) are formed in said plug (38), and communication between said first and second fluid bores (45,46) is established and blocked by said spool (41).

## Patentansprüche

1. Entlastungssystem mit einem Entlastungsventil (11), das einen Teil eines zugeführten Druckfluids in einen Tank (23) abläßt, und einem Umschaltventil (17) zum Ablassen eines Druckfluids zum Vorspannen des Entlastungsventils (11) in Richtung auf eine Reduzierung des Teils des zugeführten Druckfluids, das zum Tank (23) abgelassen wird, welches Entlastungsventil (11) und Umschaltventil (17) in Axialrichtung in Reihe in einem Hauptventilkörper (30) angeordnet sind, wobei das Entlastungsventil (11) gebildet wird durch Herstellen einer Ventilbohrung (31) in dem Hauptventilkörper (30), die einen Einlaß (32), einen Tankauslaß (33) und einen Auslaß (53) umfaßt, durch Einfügen eines Ventilkörpers (34) auf einer Seite der Ventilbohrung (31) zur Herstellung einer Verbindung zwischen dem Einlaß (32), dem Tankauslaß (33) und dem Auslaß (53) und zur Erhöhung und Verringerung der offenen Fläche zwischen dem Einlaß (32) und dem Tankauslaß (33), und durch Herstellen einer ersten Druckaufnahmekammer (49) in der Ventilbohrung (31), die mit dem Einlaß (32) verbunden ist und in der ein Druck den Ventilkörper (34) in Richtung zur Reduzierung der offenen Fläche vorspannt, **dadurch gekennzeichnet, daß** das Umschaltventil (17) gebildet ist durch Einfügen einer Ventilspule (41) an der anderen Seite der Ventilbohrung (31) zur Begrenzung einer zweiten Druckaufnahmekammer (42) zwischen der Ventilspule und dem Ventilkörper, der ein Lastdruck zugeführt wird, und durch Anordnen einer Feder (48) zum Vorspannen der Ventilspule (41) in eine Richtung zur Verbindung der ersten Druckaufnahmekammer (49) mit dem Tank entgegen dem Lastdruck der zweiten Druckaufnahmekammer (42).

2. Entlastungssystem nach Anspruch 1, bei dem die erste Druckaufnahmekammer (49) gebildet ist zwischen dem Ventilkörper (34), einem Hauptventilkörper (30) und einem Stopfen (38), wobei die zweite Druckaufnahmekammer (42) begrenzt wird zwischen dem Ventilkörper (34), dem Stopfen (38) und der Ventilspule durch Einfügen und Befestigen des Stopfens (38) an der anderen Seite der Ventilbohrung (31), durch Einfügen eines Abschnitts (40) kleinen Durchmessers des Ventilkörpers (34) an einer Seite einer axialen Bohrung (39) des Stopfen (38) und durch Einfügen der Ventilspule (41) an der anderen Seite der Axialbohrung (39), wobei die erste Druckaufnahmekammer (49) mit dem Einlaß (32) über einen Ausschnitt (50) des Ventilkörpers (34) verbunden ist und wobei eine erste Fluidbohrung (45) mit dem Tank (23) in Verbindung steht und eine zweite Fluidbohrung (46) mit der ersten Druckaufnahmekammer (49) verbunden ist, wobei die Fluidbohrung in dem Stopfen (38) ausgebildet sind und eine Verbindung hergestellt ist zwischen der ersten und zweiten Fluidbohrung (45,46), die durch die Ventilspule blockierbar ist.

## Revendications

1. Dispositif de décharge comprenant une vanne de décharge (11) drainant une partie d'un fluide sous pression fourni vers un réservoir (23) et une vanne d'aiguillage (17) pour drainer un fluide sous pression pour solliciter ladite vanne de décharge (11) dans une direction pour réduire la partie du fluide sous pression fourni drainée vers le réservoir (3), ladite vanne de décharge (11) et ladite vanne d'aiguillage (17) étant disposées en série en direction axiale dans un corps principal de vanne (30), dans lequel ladite vanne de décharge (11) est réalisée en formant dans ledit corps principal de vanne (30) un orifice de vanne (31) présentant une ouverture d'admission (32), une ouverture de réservoir (33) et une ouverture de sortie (53), en insérant un corps de vanne (34) dans une face dudit orifice de vanne (31) pour mettre en communication l'ouverture d'admission (33), l'ouverture de réservoir (33) et l'ouverture de sortie (53), et pour augmenter et diminuer l'ouverture entre ladite ouverture d'admission (32) et ladite ouverture de réservoir (33), et en formant dans ledit orifice de vanne (31) une première chambre réceptrice de pression (49) mise en communication avec ladite ouverture d'admission (32), dans lequel une pression sollicite ledit corps de vanne (34) dans une direction pour réduire ladite ouverture, **caractérisé en ce que** ladite vanne d'aiguillage (17) est réalisée en engageant une bague (41) à l'autre face dudit orifice de vanne (31) pour définir une deuxième chambre réceptrice de pression (42) entre ladite bague et ledit corps de vanne, qui est alimentée en pression de charge, et en disposant un ressort (48) pour solliciter ladite bague (41) dans une direction adaptée pour mettre en communication ladite première chambre réceptrice de pression (49) vers ledit réservoir (23) à l'encontre de la pression de charge de ladite deuxième chambre réceptrice de pression (42).

2. Dispositif de décharge suivant la revendication 1, **caractérisé en ce que** la première chambre réceptrice de pression (49) est définie entre ledit corps de vanne (34), un corps principal de vanne (30) et un bouchon (38), dans lequel ladite deuxième chambre réceptrice de pression (42) est définie entre ledit corps de vanne (34), ledit bouchon (38) et ladite bague (41), par engagement et fixation dudit bouchon (38) sur l'autre face dudit orifice de vanne (31), par engagement d'une partie de petit diamètre (40) du corps de vanne (34) d'un côté d'un orifice axial (39), dans lequel ladite première chambre réceptrice de pression (49)est mise en communication avec ladite ouverture d'admission (32) par l'intermédiaire d'une découpe (50) dudit corps de vanne (34), et dans lequel un premier orifice de passage de fluide (45) mis en communication avec ledit réservoir (23) et un deuxième orifice de passage de fluide (46) mis en communication avec ladite première chambre réceptrice de pression (49) sont formés dans ledit bouchon (38), et une communication entre lesdits premier et deuxième orifices de passage de fluide (45, 46) est établie et maintenue par ladite bague (41).
